# EUROPÄISCHE PATENTSCHRIFT

(11) **EP 3 363 292 B1**
(45) Veröffentlichungstag und Bekanntmachung des Hinweises auf die Patenterteilung: **25.03.2020**
(21) Anmeldenummer: 18155223.3
(22) Anmeldetag: 06.02.2018
(51) Int. Cl.: A21D 2/02, C09C 1/00, A23L 5/43, A21D 13/47, A21D 13/45

(54) **FÄRBUNG VON OBLATEN UND ESSPAPIER MIT PERLGLANZPIGMENTEN**
DYEING OF WAFER AND EATING PAPER WITH PEARLESCENT PIGMENTS
COLORATION D'OBLATS ET DE PAPIER COMMESTIBLE AVEC DES PIGMENTS PERLESCENTS.

(30) Priorität: 07.02.2017 DE 102017001106
(43) Veröffentlichungstag der Anmeldung: 22.08.2018
(73) Patentinhaber: Merck Patent GmbH, 64293 Darmstadt (DE)
(72) Erfinder: Schweinfurth, Ralf, 64287 Darmstadt (DE)

(56) Entgegenhaltungen:
- EP-A1- 3 189 736
- WO-A1-03/063616
- DE-A1-102004 052 544

## Beschreibung

Die vorliegende Erfindung betrifft die Verwendung von Perlglanzpigmenten basierend auf plättchenförmigen Substraten zur Färbung von Oblaten und Esspapier.

Außer für funktionelle Verwendungen werden Perlglanzpigmente immer mehr zur optischen Aufwertung von Produkten, z. B. in der Kosmetik, eingesetzt, da schöne Farben und Effekte beim Betrachter und Konsumenten angenehme subjektive Empfindungen hervorrufen. Bei der Herstellung von Effektpigmenten, z. B. für die dekorative Kosmetik, werden strengste Anforderungen an die Reinheit und die Qualität der Pigmente gestellt. Daher werden Effektpigmente auch im Nahrungsmittelbereich, insbesondere für Süsswaren, bereits zur Verbesserung des Farbeffektes bzw. zur Farbgebung eingesetzt, wie z.B aus der DE 10 2004 052544 A1, WO 03/063616 A1 und EP 3 189 736 A1 bekannt.

Unter dem Begriff Oblate versteht man ein dünnes Gebäck, das zum menschlichen Verzehr und als Siegelmaterial verwendet wird und welches aus Wasser und Mehl hergestellt wird. Zusätzlich kann noch Stärke verwendet werden, wodurch die Oblate heller bzw. weißer wird. Die Zugabe von Melasse zum Teig macht die Oblate nach dem Backen dunkler. Solche Oblaten werden z.B. als Brothostien verwendet. Aus Maismehl bzw. Maisstärke und Wasser werden glutenfreie Oblaten hergestellt.

Durch den Verzicht auf Teigsäuerung, Lockerungsmittel, Eiweiß und Zucker und eine geringe Kleberbildung gehen Oblaten nicht auf, sondern bleiben flach, haben eine pappige, aber brüchige Beschaffenheit und einen faden Geschmack. Sie werden mit wenig Fett als Trennmittel in so genannten Oblateneisen gebacken, die aus zwei Backflächen bestehen, die entweder auf dem Feuer erhitzt werden oder beheizbar sind. Manche Oblaten haben eine ebene, glatte Oberfläche, andere haben Oberflächen mit Mustern, Beschriftungen oder bildhaften, oft religiösen, Motiven. Letztgenannte Oberflächen werden erhalten durch eine in die Backflächen eingebrachte Gravur. Oftmals sind aber über die Gravur der Backflächen auf die Oblaten-Oberfläche aufgebrachte Motive und Strukturen schlecht erkennbar. Weiterhin lassen sich die Oblaten mit/ohne Motiv häufig schlecht aus der Backform lösen bzw. gehen dabei zu Bruch.

Obwohl Oblaten nicht den erforderlichen Mindestanteil an Fett bzw. Zucker von mindestens 10 % enthalten, zählen sie laut Deutsches Lebensmittelbuch zu den Dauerbackwaren, welche wiederum zu den feinen Backwaren gerechnet werden.

Werden zusätzlich Farbstoffe und/oder Pigmente in den Oblatenteig eingemischt, oftmals auch in Verbindung mit Süßstoffen und Aromen, so spricht man auch von sogenanntem Esspapier.

Oblaten werden typischerweise bei Temperaturen von 150 bis 250 °C und einer Backzeit von 1 bis 8 Minuten hergestellt. Von Nachteil ist, dass bei diesen Temperaturen die Farbstärke vieler in Oblaten verwendeter natürlicher und künstlicher Farbstoffe und Pigmente bei zunehmender Temperatur jedoch stark abnimmt. Deshalb müssen bei der Herstellung von farbigen Oblaten Farbe/Pigment meist im Überschuss zugegeben werden. Im Extremfall lässt sich der gewünschte Farbeffekt überhaupt nicht erzielen.

Alternativ kommt zur Erzielung der Färbung der Auftrag von Farbe/Pigment auf die fertige Oblaten-Oberfläche in Betracht. Dieser gestaltet sich jedoch aufgrund der zerbrechlichen Produktstruktur als unmöglich bzw. nur schwierig ausführbar. Folglich verbleibt die Einmischung von Farben/Pigmenten in den Oblaten-Teig als die bestmögliche technische Alternative.

Aufgabe der vorliegenden Erfindung ist es Oblaten und Esspapier sowohl in der Masse als auch auf der Oberfläche so einzufärben, ohne dass die Produktstruktur zerbricht und die Färbung durch die Backtemperaturen negativ beeinflusst wird. Gleichzeitig sollten durch die Einfärbung Oberflächen mit Mustern, Beschriftungen oder bildhaften, oft religiösen Motiven, nach der Einfärbung der Oblate bzw. des Esspapiers weiterhin gut sichtbar sein.

Überraschenderweise wurde gefunden, dass bei der Einfärbung von Oblaten, Esspapier und ähnlichen Backwaren mit Perlglanzpigmenten, die oben genannten Nachteile nicht mehr bestehen. Die Perlglanzpigmente überstehen ohne Probleme Backtemperaturen von 200 °C und mehr und verleihen den Oblaten neue optische Effekte und eine erhöhte Stabilität, d.h. die Bruchanfälligkeit nimmt ab. Ein weiterer Vorteil ist, dass die pigmentierten Oblaten sich leichter bei der Herstellung aus der Backform lösen und damit die Ausbeute erhöht wird.

Gegenstand der vorliegenden Erfindung ist die Verwendung von ein oder mehreren Perlglanzpigmenten basierend auf plättchenförmigen Substraten zur Färbung von Oblaten und Esspapier.

Es hat sich gezeigt, dass bei bei den fertig gebackenen Oblaten Muster und Motive, welche durch die Verwendung von Oblatenbackeisen mit entsprechender Gravur entstehen, bei der Präsenz von Perlglanzpigmenten im Oblaten-Teig optisch deutlich besser hervorgehoben und für den Betrachter/Konsumenten sehr viel besser sichtbar bzw. erkennbar sind. Zusammen mit dem erzielten Perlglanz der Oblaten resultiert eine deutliche Steigerung der visuellen Attraktivität von Oblaten bzw. Esspapier für den Konsumenten.

Die Perlglanzpigmente, insbesondere Interferrenzpigmente, basieren auf plättchenförmigen Substraten, die mit ein oder mehreren Metalloxiden und/oder Metallhydroxiden beschichtet sind.

Unter dem Begriff plättchenförmige Substrate sind alle dem Fachmann bekannten plättchenförmigen Substrate zu verstehen. Geeignete Basissubstrate für die Perlglanzpigmente sind transparente oder semitransparente plättchenförmige Substrate. Insbesondere geeignet sind Schichtsilikate, Talkum, Kaolin, plättchenförmige Eisen- oder Aluminiumoxide, Glas-, SiO₂-, TiO₂-Plättchen, plättchenförmige Mischoxide, wie z. B. FeTiO₃, Fe₂TiO₅, oder andere vergleichbare Materialien, abhängig von der jeweiligen gesetzlichen Zulässigkeit für die Verwendung bei Lebensmitteln.

Die Größe der Basissubstrate ist an sich nicht kritisch und kann auf den jeweiligen Anwendungszweck abgestimmt werden. In der Regel haben die plättchenförmigen Substrate eine Dicke von 0,005 bis 10 µm, insbesondere von 0,05 bis 5 µm. Die Ausdehnung in den beiden anderen Bereichen beträgt üblicherweise 1 bis 500 µm, vorzugsweise 2 bis 200 µm, und insbesondere 5 bis 150 µm. Ganz besonders bevorzugte Perlglanzpigmente weisen Partikelgrößen von 10-60 µm oder 5-25 µm oder 10-150 µm oder 5-50 µm auf.

Bevorzugte Perlglanzpigmente basieren auf natürlichen Glimmerplättchen, synthetischen Glimmerplättchen, SiO₂-Plättchen, Al₂O₃-Plättchen, TiO₂-Plättchen, Glasplättchen, Fe₂O₃-Plättchen, insbesondere synthetischen Glimmerplättchen, natürlichen Glimmerplättchen und SiO₂-Plättchen (Nr. E555 bzw. E551 in der Liste der in der Europäischen Union zugelassenen Lebensmittelzusatzstoffe). Die synthetischen Plättchen, wie z.B. synthetische Glimmerplättchen, SiO₂-Plättchen, Al₂O₃-Plättchen, TiO₂-Plättchen, Glasplättchen, können dotiert oder undotiert sein. Geeignete Dotiermittel sind u.a. Metalloxide, wie z.B. TiO₂, ZrO₂, SnO₂.

Als Perlglanzpigmente werden Pigmente auf der Basis plättchenförmiger, transparenter oder semitransparenter Substrate aus z.B. Schichtsilikaten, wie etwa Glimmer, synthetischem Glimmer, Talkum, Sericit, Kaolin, aus Glas oder anderen silikatischen Materialien verwendet, die mit farbigen oder farblosen Metalloxiden wie z.B. TiO₂, Titansuboxide, Titanoxinitride, Fe₂O₃, Fe₃O₄, SnO₂, ZnO und anderen Metalloxiden allein oder in Mischung in einer einheitlichen Schicht oder in aufeinanderfolgenden Schichten beschichtet sind. Besonders bevorzugte Perlglanzpigmente basierend auf synthetischen oder natürlichen Glimmerplättchen, sind mit ein oder mehreren Metalloxiden aus der Gruppe TiO₂, Fe₂O₃ oder Fe₃O₄ oder deren Gemische beschichtet oder weisen eine Multilayer-Beschichtung auf bestehend aus alternierend hoch- und niedrigbrechenden Schichten, wie z.B. TiO₂ - SiO₂ - TiO₂.

Weiterhin bevorzugt sind mit TiO₂ und/oder Fe₂O₃ beschichtete SiO₂- oder Al₂O₃-Plättchen. Die Beschichtung der SiO₂-Plättchen mit ein oder mehreren Metalloxiden kann z.B. erfolgen wie in der WO 93/08237 (nasschemische Beschichtung) oder DE-OS 196 14 637 (CVD-Verfahren) beschrieben.

Auch bei den auf die plättchenförmigen Substrate aufgebrachten Metalloxiden handelt es sich vorzugsweise um für den Menschen verzehrbare Materialien in Lebensmittelqualität (Nr. E 171 (TiO₂) bzw. E 172 (Eisenoxid) in der Liste der in der Europäischen Union zugelassenen Lebensm ittelzusatzstoffe).

Weiterhin sind bevorzugt Perlglanzpigmentgemische, die unterschiedliche Partikelgrößen aufweisen. Besondere Effekte können erzielt werden, wenn Perlglanzpigmente mit "kleinen" Partikelgrößen wie z.B. 5-25 µm oder 10-60 µm mit Perlglanzpigmenten mit "großen" Partikelgrößen, wie z.B. 10-150 µm, gemischt werden.

Die Dicke der einzelnen Schichten, vorzugsweise ein oder mehrere Metalloxidschichten, auf dem Basissubstrat, beträgt vorzugsweise 10-500 nm, insbesondere 20-400 nm und ganz besonders bevorzugt 30 - 350 nm.

Bei Mehrschichtpigmenten, die auf der Substratoberfläche vorzugsweise alternierend hoch- und niedrigbrechende Schichten (A)(B)(A) aufweisen, besitzt die hochbrechende Schicht (Schicht A) in der Regel Schichtdicken von 10 - 500 nm, vorzugsweise 20 - 400 nm und insbesondere 30 - 350 nm. Die Dicke der niedrigbrechenden Schicht (Schicht B) beträgt vorzugsweise 10-500 nm, vorzugsweise 20 - 400 nm, insbesondere 30 - 350 nm.

Unter hochbrechenden Schichten sind in dieser Anmeldung Schichten mit einem Brechungsindex von ≥ 1,8 zu verstehen, wie z.B. TiO₂, Fe₂O₃, Fe₃O₄, während niedrigbrechende Schichten einen Brechungsindex von < 1,8 aufweisen, wie z.B. SiO₂, Al₂O₃. AIO(OH).

Die Perlglanzpigmente, können mehrere, gleiche oder verschiedene Kombinationen an Schichtpaketen enthalten, bevorzugt ist aber die Belegung des Substrats bei Mehrschichtpigmenten mit nur einem Schichtpaket (A) (B) (A). Zur Intensivierung der Farbstärke kann das erfindungsgemäße Pigment bis zu 4 Schichtpakete enthalten, wobei die Dicke aller Schichten auf dem Substrat 3 µm allerdings nicht überschreiten sollte. Vorzugsweise wird bei Mehrschichtpigmenten mit 3 oder mehr Schichten auf der Substratoberfläche eine ungerade Anzahl von Schichten auf das plättchenförmige Substrat aufgebracht mit je einer hochbrechenden Schicht in innerster und äußerster Lage. Besonders bevorzugt ist ein Aufbau von drei optischen Interferenzschichten in der Reihenfolge (A) (B) (A). Als hochbrechende Schicht kommen vorzugsweise TiO₂, Fe₂O₃ und/oder Fe₃O₄ oder ein Gemisch aus Titanoxid und Eisenoxid in Frage. Das TiO₂ kann dabei in der Rutil- oder in der Anatasmodifikation vorliegen.

Als farblose niedrigbrechende für die Beschichtung (B) geeignete Materialien sind vorzugsweise Metalloxide bzw. die entsprechenden Oxidhydrate, wie z. B. SiO₂, Al₂O₃, AIO(OH), B₂O₃, MgF₂, MgSiO₃ oder ein Gemisch der genannten Metalloxide, geeignet entsprechend der gesetzlichen Zulassungen zur Verwendung bei Lebensmitteln bzw. pharmazeutischen Produkten.

Bei den besonders bevorzugten Perlglanzpigmenten für den Lebensmittelbreich handelt es sich um Glimmer-Plättchen (synthetisch oder natürlich) oder SiO₂-Plättchen, die mit einer Metalloxidschicht (TiO₂ oder Fe₂O₃ oder Fe₃O₄) der Dicke von 10 nm bis 500 nm umhüllt sind. Die Dicken der Plättchen liegen im Bereich von 200 nm bis 900 nm. Derartige Pigmente zeichnen sich je nach Dicke der eingesetzten Plättchen und der aufgebrachten Metalloxidschichten sowie nach Art des Metalloxids durch besonders intensive Interferenzfarben und/oder durch starke winkelabhängige Farbwechseleffekte aus. Letztere zeigen sich dabei so, dass ein Betrachter beim Wechsel seiner Beobachtungsposition zum pigmentierten Objekt unterschiedliche Farben wahrnimmt.

Bevorzugte Effektpigmente sind insbesondere ausgewählt aus den nachfolgend genannten Pigmenten:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃
SiO₂-Plättchen + TiO₂/Fe₂O₃-Gemisch + SiO₂ + TiO₂/Fe₂O₃-Gemisch
SiO₂-Plättchen + Fe₂O₃-Gemisch + SiO₂ + TiO₂/Fe₂O₃-Gemisch.

Für den Lebensmittelbereich zugelassene Perlglanzpigmente sind im Handel erhältlich, beispielsweise unter der Marke Candurin® von der Fa. Merck KGaA.

Die Einarbeitung der Perlglanzpigmente kann während oder nach der Teigzubereitung erfolgen. Die Einarbeitung erfolgt durch herkömmliche Mischverfahren, bevorzugt durch Rührgeräte oder langsame Mixer bzw. mit dem Schneebesen per Hand. Es können aber auch andere dem Fachmann bekannte Einarbeitungsverfahren verwendet werden. Es kommt hierbei zu keiner Agglomeration der Perlglanzpigmente, im Gegensatz bei der Verwendung anderer Lebensmittelfarbstoffe, wie z.B. Titandioxid.

Sehr gute Ergebnisse hinsichtlich der Farbgebung liefern Einsatzmengen von Perlglanzpigment in Mengen von 0,5 - 10 Gew.-%, bevorzugt 2 - 8 Gew.-%, bezogen auf die Gesamtmasse des Teiges. Eine Überdosierung zum Ausgleichen des durch die Backtemperatur eintretenden Farbverlustes, wie bei anderen herkömmlichen Farbstoffen/Pigmenten üblich kann bei der Verwendung von Effektpigmenten, insbesondere Perlglanzpigmenten und Interferenzpigmenten, somit entfallen.

Die Perlglanzpigmente können sowohl einzeln als auch als Mischungen verschiedener Perlglanzpigmente eingesetzt werden. Insbesondere werden deutlich sichtbare Vorteile hinsichtlich Deckvermögen und resultierendem Glanzeffekt erzielt, wenn man in einer solchen Mischung zwei oder mehrere Perlglanzpigmente unterschiedlicher Partikelgrößen kombiniert.

Des Weiteren können Perlglanzpigmente auch mit anderen natürlichen, synthetischen oder künstlichen Lebensmittelfarbstoffen oder -pigmenten und färbenden Frucht- und Pflanzenextrakten kombiniert werden. Ideal geeignet sind hierzu z.B. Temperatur-stabile Farbstoffe und Pigmente wie z.B. Pflanzenkohle E153, Karmin E120 oder Karamell E150. Es können auch temperaturempfindliche Farbstoffe wie z.B. Rote Beete E162 oder Chlorophyll E140 verwendet werden.

Eine Verwendung der Perlglanzpigmente im Oblatenteig zusammen mit Aromen und/oder Süßstoffen ist ebenfalls problemlos möglich.

Die besten Ergebnisse hinsichtlich des gewünschten Perlglanzeffektes, in Anhängigkeit der verwendeten Pigmente - Perlglanzpigment oder Interferenzpigment - lassen sich in Oblaten-Teigen erzielen, welche nur aus Wasser und Mehl hergestellt werden. Als Mehl kann Weizen- und/oder Maismehl verwendet werden. Die Teigzusammensetzung an sich kann je nach Rezeptur zwischen 10 - 60 Gew.-% Mehl enthalten. Die Anwesenheit von Stärke im Teig kann den optischen Farbeffekt allerdings beeinträchtigen.

Die verwendeten Perlglanzpigmente erleiden während des Backprozesses der Oblaten keinerlei temperaturbedingten Farbverlust. Ebenfalls werden verwendete Geräte und die Backoberfläche der Oblatenbackmaschinen in keinster Weise durch Perlglanzpigmente, im Gegensatz zu anderen insbesondere löslichen Lebensmittelfarbstoffen, eingefärbt, was wiederum den notwendigen Reinigungsschritt deutlich vereinfacht. Auch führt die Einarbeitung der Perlglanzpigmente in den Oblaten-Teig zu keinen geschmacklichen Beeinträchtigungen.

Gegenstand der Erfindung ist ebenfalls ein Herstellverfahren zur Einfärbung von Oblaten und Esspapier.

Die nachfolgenden Beispiele sollen die Erfindung erläutern, ohne sie jedoch zu begrenzen. Sofern nicht anders angegeben sind alle Prozentangaben Gewichtsprozent.

### Beispiele:

### Rezeptur und Herstellverfahren für alle Beispiele:

Zusammensetzung: 10 kg Weizenmehl (Type 405), 17 I Wasser (15 °C), Perlglanzpigmente und weitere Komponenten wie in den Beispielen angegeben; Prozentangaben sind Gew.-% und beziehen sich auf die Teig-Gesamtmasse.

| | |
|---|---|
| Mischen: | 15 min in Planetenrührmaschine |
| Backen: | 1 - 3 Minuten bei 200/220. °C in Platten-Oblaten-Backeisen |

**Beispiel 1**
   Candurin® Silver Sparkle (Perlglanzpigment auf Basis Glimmer E555 + Titandioxid E171; Teilchengröße: 10-150 µm)
   Beispiel 1.1: 2 % Candurin® Silver Sparkle
   Beispiel 1.2: 4 % Candurin® Silver Sparkle
   Beispiel 1.3: 6 % Candurin® Silver Sparkle
   Beispiel 1.4: 8 % Candurin® Silver Sparkle
   Bei der Zugabe von 2 % Candurin® Silver Sparkle ist der Perlglanz sichtbar; sehr schöner Perlglanz bei 4 % und 6 %. Erhöhung der Pigmentkonzentration auf 8 % ergibt eine nur geringe Verbesserung des Effektes; leicht glitzernder Effekt.
**Beispiel 2**
   Candurin® Gold Sparkle (Perlglanzpigment auf Basis Glimmer E555 und Titandioxid E171 + Eisenoxid E172; Teilchengröße: 10-150 µm)
   Beispiel 2.1: 2 % Candurin® Gold Sparkle
   Beispiel 2.2: 4 % Candurin® Gold Sparkle
   Beispiel 2.3: 6 % Candurin® Gold Sparkle
   Bei 2 % ist der Perlglanz sichtbar; sehr schöner Perlglanz bei 4 % und 6 %; leicht glitzernder Effekt.
**Beispiel 3**
   Candurin® Red Sparkle (Perlglanzpigment auf Basis Glimmer E555 + Eisenoxid E172ii; Teilchengröße: 10-150 µm)
   Beispiel 3.1: 2 % Candurin® Red Sparkle
   Beispiel 3.2: 4 % Candurin® Red Sparkle
   Beispiel 3.3: 6 % Candurin® Red Sparkle
   Bei 2 % ist der Perlglanz sichtbar; sehr schöner Perlglanz bei 4 % und 6 %; leicht glitzernder Effekt.
**Beispiel 4**
   Candurin® Silver Lustre (Perlglanzpigment auf Basis Glimmer E555 + Titandioxid E171; Teilchengröße: 10 - 60 µm)
   Beispiel 4.1: 2 % Candurin® Silver Lustre
   Beispiel 4.2: 4 % Candurin® Silver Lustre
   Beispiel 4.3: 6 % Candurin® Silver Lustre
   Bei 2 % ist der Perlglanz sichtbar; sehr schöner Perlglanz bei 4 % und 6 %. Der Perlglanz wirkt durch die Verwendung eines Perlglanzpigmentes mit kleinerer Partikelgröße insgesamt homogener.
**Beispiel 5**
   Candurin® Red Lustre (Perlglanzpigment auf Basis Glimmer E555 + Eisenoxid E172ii; Teilchengröße: 10-60 µm)
   Beispiel 5.1: 2 % Candurin® Red Lustre
   Beispiel 5.2: 4 % Candurin® Red Lustre
   Beispiel 5.3: 6 % Candurin® Red Lustre
   Bei 2 % ist der Perlglanz sichtbar; sehr schöner Perlglanz bei 4 % und 6 %. Der Perlglanz wirkt durch die Verwendung eines Perlglanzpigmentes mit kleinerer Partikelgröße insgesamt homogener.
**Beispiel 6**
   Candurin® Brown Amber (Perlglanzpigment auf Basis Glimmer E555 + Eisenoxid E172ii; Teilchengröße: 10-60 µm)
   Beispiel 6.1: 2 % Candurin® Brown Amber
   Beispiel 6.2: 4 % Candurin® Brown Amber
   Beispiel 6.3: 6 % Candurin® Brown Amber
   Bei 2 % ist der Perlglanz sichtbar; sehr schöner Perlglanz bei 4 % und 6 %. Der Perlglanz wirkt durch die Verwendung eines Perlglanzpigmentes mit kleinerer Partikelgröße insgesamt homogener; leicht metallischer Effekt.
**Beispiel 7**
   Candurin® Gold Shimmer (Perlglanzpigment auf Basis Glimmer E555 + Titandioxid E171; Teilchengröße: 10 - 60 µm)
   Beispiel 7.1: 4 % Candurin® Gold Shimmer
   Beispiel 7.2: 6 % Candurin® Gold Shimmer
   Candurin® Gold Shimmer ist ein sogenanntes Interferenzpigment mit gelber Interferenzfarbe. Auch hier zeigt sich ein schöner, intensiver gelblicher Interferenzfarbton bei 4 % und 6 %.
**Beispiel 8**
   Candurin® Silver Lustre (Perlglanzpigment auf Basis Glimmer E555 + Titandioxid E171; Teilchengröße: 10 - 60 µm)
   +
   Candurin® Silver Sparkle (Perlglanzpigment auf Basis Glimmer E555 + Titandioxid E171; Teilchengröße: 10 - 150 µm)
   kombiniert im Gewichtsverhältnis 1 : 1
   Beispiel 8.1: 4 % Candurin®-Mischung
   Beispiel 8.2: 6 % Candurin®-Mischung
   Diese Kombination von zwei Perlglanzpigmenten mit unterschiedlicher Partikelgröße ergibt bei beiden Konzentrationen von 4% und 6 % einen sehr schönen Perlglanzeffekt, welcher sowohl sehr homogen, als auch glitzernd ist
**Beispiel 9**
   Candurin® Gold Lustre (Perlglanzpigment auf Basis Glimmer E555 + Titandioxid E171 + Eisenoxid E172ii; Teilchengröße: 10-60 µm)
   +
   Candurin® Gold Sparkle (Perlglanzpigment auf Basis Glimmer E555 + Titandioxid E171 + Eisenoxid E172ii; Teilchengröße: 10-150 µm)
   kombiniert im Gewichtsverhältnis 1 : 1
   Beispiel 9.1: 4 % Candurin®-Mischung
   Beispiel 9.2: 6 % Candurin®-Mischung
   Ergebnis wie Beispiel 8.
**Beispiel 10**
   Candurin® Red Lustre (Perlglanzpigment auf Basis Glimmer E555 + Eisenoxid E172ii; Teilchengröße: 10-60 µm)
   +
   Candurin® Red Sparkle (Perlglanzpigment auf Basis Glimmer E555 + Eisenoxid E172ii; Teilchengröße: 10-150 µm)
   kombiniert im Gewichtsverhältnis 1 : 1
   Beispiel 10.1: 4 % Candurin®-Mischung
   Beispiel 10.2: 6 % Candurin®-Mischung
   Ergebnis wie Beispiel 8.
**Beispiel 11**
   Candurin® Silver Lustre (Perlglanzpigment auf Basis Glimmer E555 + Titandioxid E171; Teilchengröße: 10 - 60 µm)
   +
   Candurin® Red Sparkle (Perlglanzpigment auf Basis Glimmer E555 + Eisenoxid E172ii; Teilchengröße: 10-150 µm)
   kombiniert im Verhältnis 2 : 1
   Beispiel 11.1: 4 % Candurin®-Mischung
   Beispiel 11.2: 6 % Candurin®-Mischung
   Antik-rosafarbener Effekt; durch die Zugabe an Candurin® Red Sparkle kann die Rotfärbung modifiziert werden.
**Beispiel 12**
   Candurin® Silver Lustre (Perlglanzpigment auf Basis Glimmer E555 + Titandioxid E171; Teilchengröße: 10 - 60 µm)
   +
   Pflanzenkohle E153 (Fiorio Colori SA)
   Beispiel 12.1: 5 % Candurin® Silver Lustre + 0,03% Pflanzenkohle E153 Durch die Kombination mit dem schwarzen Pigment E153 können verschiedene Silbertöne in Kombination mit einem silberweißen Perlglanzpigment erzielt werden; die Intensität des Silberfarbtones wird über die Zugabe an E153 eingestellt.
**Beispiel 13**
   Candurin® Silver Lustre (Perlglanzpigment auf Basis Glimmer E555 + Titandioxid E171; Teilchengröße: 10 - 60 µm)
   +
   Candurin® Gold Sparkle (Perlglanzpigment auf Basis Glimmer E555 + Titandioxid E171 + Eisenoxid E172ii; Teilchengröße: 10-150 µm) kombiniert im Gewichtsverhältnis 2 : 1
   Beispiel 13.1: 4 % Candurin®-Mischung
   Beispiel 13.2: 6 % Candurin®-Mischung
   Durch die Kombination entsteht ein sehr schöner, intensiver elfenbeinfarbener Perlglanzeffekt; die Intensität kann über die Zugabe an goldenem Perlglanzpigment variiert werden.
**Beispiel 14**
   Candurin® Silver Lustre (Perlglanzpigment auf Basis Glimmer E555 + Titandioxid E171; Teilchengröße: 10 - 60 µm)
   +
   Karminrot E120 (Fiorio Colori SA)
   Beispiel 14.1: 5 % Candurin® Silver Lustre + 0,02 % Karminrot E120
   Glänzender pinkfarbener Perlglanzeffekt.
**Beispiel 15**
   Candurin® Silver Lustre (Perlglanzpigment auf Basis Glimmer E555 + Titandioxid E171; Teilchengröße: 10 - 60 µm)
   +
   Rote Beete E160 (Chr. Hansen A/S)
   Beispiel 15.1: 5 % Candurin® Silver Lustre + 1 % Rote Beete E160
   Farbintensität des Rote Beete-Konzentrats nach dem Backprozess ist reduziert; leichter Braunstich; keine Auswirkung auf Perlglanzeffekt sichtbar.
**Beispiel 16**
   Candurin® NXT Ruby Red (Perlglanzpigment auf Basis von SiO₂-Plättchen E551 + Eisenoxid E172ii; Teilchengröße: 5-50 µm)
   Beispiel 16.1: 5 % Candurin® NXT Ruby Red
   Intensiver, gleichmäßiger Perlglanzeffekt.
**Beispiel 17**
   Candurin® Silver Lustre (Perlglanzpigment auf Basis Glimmer E555 + Titandioxid E171; Teilchengröße: 10 - 60 µm)
   +
   Vanille-Aroma (Symrise GmbH)
   +
   Süßstoff Aspartam (Worlee GmbH)
   Beispiel 17.1: 5 % Candurin® Silver Lustre + 0,8 % Aroma + 0,5 % Süßstoff
   Durch die gleichzeitige Verwendung des Süßstoffs und des Aromas kommt es zu keiner Beeinträchtigung des resultierenden Perlglanzeffektes. Das Aroma und der Süßstoff sind geschmacklich gut und deutlich wahrnehmbar.

## Patentansprüche

1. Verwendung von ein oder mehreren Perlglanzpigmenten basierend auf plättchenförmigen Substraten zur Färbung von Oblaten und Esspapier.

2. Verwendung nach Anspruch 1, **dadurch gekennzeichnet, dass** das Perlglanzpigment ein Interferenzpigment oder ein Multilayerpigment ist.

3. Verwendung nach Anspruch 1 oder 2, **dadurch gekennzeichnet, dass** das plättchenförmige Substrat ein natürliches Glimmerplättchen, ein synthetisches Glimmerplättchen, Talkum, Kaolin, ein Glasplättchen, ein Siliziumdioxid-Plättchen, ein Titandioxid-Plättchen, ein Aluminiumoxid-Plättchen oder ein Eisenoxidplättchen ist.

4. Verwendung nach einem oder mehreren der Ansprüche 1 bis 3, **dadurch gekennzeichnet, dass** das plättchenförmige Substrat mit ein oder mehreren Schichten aus Metalloxiden und/oder Metalloxidgemischen vollständig beschichtet ist.

5. Verwendung nach einem oder mehreren der Ansprüche 1 bis 4, **dadurch gekennzeichnet, dass** das Perlglanzpigment ausgewählt ist der Gruppe der nachfolgend genannten Pigmente:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃
SiO₂-Plättchen + TiO₂/Fe₂O₃-Gemisch + SiO₂ + TiO₂/Fe₂O₃-Gemisch
SiO₂-Plättchen + Fe₂O₃-Gemisch + SiO₂ + TiO₂/Fe₂O₃-Gemisch.

6. Verwendung nach einem oder mehreren der Ansprüche 1 bis 5, **dadurch gekennzeichnet, dass** 0,5 - 10 Gew.-% an Perlglanzpigment bezogen auf die Gesamtmasse des Teiges zur Herstellung der Oblate und des Esspapiers eingesetzt werden.

7. Verwendung nach einem oder mehreren der Ansprüche 1 bis 6, **dadurch gekennzeichnet, dass** das Perlglanzpigment während oder nach der Zubereitung des Teigs der Oblaten und des Esspapiers in diesen eingearbeitet wird.

8. Verwendung nach einem oder mehreren der Ansprüche 1 bis 7, **dadurch gekennzeichnet, dass** (i) Perlglanzpigmente einzeln, (ii) deren Mischungen oder (iii) Mischungen einzelner Perlglanzpigmente in Kombination mit weiteren Farbstoffen und/oder Pigmenten oder (iv) Mischungen von Mischungen von Perlglanzpigmenten mit weiteren Farbstoffen und/oder Pigmenten eingesetzt werden.

9. Verwendung nach einem oder mehreren der Ansprüche 1 bis 8, **dadurch gekennzeichnet, dass** Mischungen von Perlglanzpigmenten unterschiedlicher Partikelgrößen eingesetzt werden.

10. Verwendung nach einem oder mehreren der Ansprüche 1 bis 9, **dadurch gekennzeichnet, dass** zusätzlich Aromen und/oder Süßstoffe eingesetzt werden.

11. Verfahren zur Färbung von Oblaten und Esspapier, **dadurch gekennzeichnet, dass** ein oder mehrere Perlglanzpigmente basierend auf plättchenförmigen Substraten in den Teig für die Oblaten und das Esspapier eingearbeitet werden.

12. Verfahren nach Anspruch 10 oder 11, **dadurch gekennzeichnet dass** der zur Herstellung von Oblaten und Esspapier eingesetzte und Perlglanzpigmente enthaltende Teig keine Stärke enthält.

13. Oblaten und Esspapier, **dadurch gekennzeichnet, dass** sie ein oder mehrere Perlglanzpigmente basierend auf plättchenförmigen Substraten und optional weitere Färbemittel enthalten.

## Claims

1. Use of one or more pearlescent pigments based on flake-form substrates for colouring wafers and edible paper.

2. Use according to Claim 1, **characterised in that** the pearlescent pigment is an interference pigment or a multilayered pigment.

3. Use according to Claim 1 or 2, **characterised in that** the flake-form substrate is a natural mica flake, a synthetic mica flake, talc, kaolin, a glass flake, a silicon dioxide flake, a titanium dioxide flake, an aluminium oxide flake or an iron oxide flake.

4. Use according to one or more of Claims 1 to 3, **characterised in that** the flake-form substrate is completely coated with one or more layers of metal oxides and/or metal oxide mixtures.

5. Use according to one or more of Claims 1 to 4, **characterised in that** the pearlescent pigment is selected from the group of the pigments mentioned below:
natural mica flakes + TiO₂
natural mica flakes + Fe₂O₃
natural mica flakes + Fe₃O₄
natural mica flakes + TiO₂ + Fe₂O₃
natural mica flakes + TiO₂ + Fe₃O₄
natural mica flakes + Fe₂O₃ + TiO₂
natural mica flakes + Fe₃O₄ + TiO₂
natural mica flakes + TiO₂/Fe₂O₃ mixture
natural mica flakes + TiO₂/Fe₃O₄ mixture
synthetic mica flakes + TiO₂
synthetic mica flakes + Fe₂O₃
synthetic mica flakes + Fe₃O₄
synthetic mica flakes + TiO₂ + Fe₂O₃
synthetic mica flakes + TiO₂ + Fe₃O₄
synthetic mica flakes + Fe₂O₃ + TiO₂
synthetic mica flakes + Fe₃O₄ + TiO₂
synthetic mica flakes + TiO₂/Fe₂O₃ mixture
synthetic mica flakes + TiO₂/Fe₃O₄ mixture
SiO₂ flakes + TiO₂
SiO₂ flakes + Fe₂O₃
SiO₂ flakes + Fe₃O₄
SiO₂ flakes + TiO₂ + Fe₂O₃
SiO₂ flakes + TiO₂ + Fe₃O₄
SiO₂ flakes + Fe₂O₃ + TiO₂
SiO₂ flakes + Fe₃O₄ + TiO₂
SiO₂ flakes + TiO₂/Fe₂O₃ mixture
SiO₂ flakes + TiO₂/Fe₃O₄ mixture
natural mica flakes + TiO₂ + SiO₂ + TiO₂
natural mica flakes + Fe₂O₃ + SiO₂ + TiO₂
natural mica flakes + TiO₂ + SiO₂ + Fe₂O₃
natural mica flakes + TiO₂ + SiO₂ + Fe₃O₄
natural mica flakes + TiO₂/Fe₂O₃ mixture + SiO₂ + Fe₂O₃
natural mica flakes + TiO₂/Fe₂O₃ mixture + SiO₂ + TiO₂/Fe₂O₃ mixture
natural mica flakes + Fe₂O₃ mixture + SiO₂ + TiO₂/Fe₂O₃ mixture
synthetic mica flakes + TiO₂ + SiO₂ + TiO₂
synthetic mica flakes + Fe₂O₃ + SiO₂ + TiO₂
synthetic mica flakes + TiO₂ + SiO₂ + Fe₂O₃
synthetic mica flakes + TiO₂ + SiO₂ + Fe₃O₄
synthetic mica flakes + TiO₂/Fe₂O₃ mixture + SiO₂ + Fe₂O₃
synthetic mica flakes + TiO₂/Fe₂O₃ mixture + SiO₂ + TiO₂/Fe₂O₃ mixture
synthetic mica flakes + Fe₂O₃ mixture + SiO₂ + TiO₂/Fe₂O₃ mixture
SiO₂ flakes + TiO₂ + SiO₂ + TiO₂
SiO₂ flakes + Fe₂O₃ + SiO₂ + TiO₂
SiO₂ flakes + TiO₂ + SiO₂ + Fe₂O₃
SiO₂ flakes + TiO₂ + SiO₂ + Fe₃O₄
SiO₂ flakes + TiO₂/Fe₂O₃ mixture + SiO₂ + Fe₂O₃
SiO₂ flakes + TiO₂/Fe₂O₃ mixture + SiO₂ + TiO₂/Fe₂O₃ mixture
SiO₂ flakes + Fe₂O₃ mixture + SiO₂ + TiO₂/Fe₂O₃ mixture.

6. Use according to one or more of Claims 1 to 5, **characterised in that** 0.5 - 10% by weight of pearlescent pigment, based on the total weight of the dough, are used for the production of the wafers or edible paper.

7. Use according to one or more of Claims 1 to 6, **characterised in that** the pearlescent pigment is incorporated into the dough of the wafers or edible paper during or after preparation thereof.

8. Use according to one or more of Claims 1 to 7, **characterised in that** (i) individual pearlescent pigments, (ii) mixtures thereof or (iii) mixtures of individual pearlescent pigments in combination with further dyes and/or pigments or (iv) mixtures of mixtures of pearlescent pigments with further dyes and/or pigments are employed.

9. Use according to one or more of Claims 1 to 8, **characterised in that** mixtures of pearlescent pigments having different particle sizes are employed.

10. Use according to one or more of Claims 1 to 9, **characterised in that** flavours and/or sweeteners are additionally employed.

11. Process for colouring wafers and edible paper, **characterised in that** one or more pearlescent pigments based on flake-form substrates are incorporated into the dough for the wafers and the edible paper.

12. Process according to Claim 10 or 11, **characterised in that** the dough comprising pearlescent pigments which is employed for the production of wafers and edible paper does not contain any starch.

13. Wafers and edible paper, **characterised in that** they comprise one or more pearlescent pigments based on flake-form substrates and optionally further colourants.

## Revendications

1. Utilisation d'un ou de plusieurs pigment(s) perlescent(s) qui est/sont basés sur des substrats sous forme de flocons pour colorer des oublies et du papier comestible.

2. Utilisation selon la revendication 1, **caractérisée en ce que** le pigment perlescent est un pigment d'interférence ou un pigment à multiples couches.

3. Utilisation selon la revendication 1 ou 2, **caractérisée en ce que** le substrat sous forme de flocons est un flocon de mica naturel, un flocon de mica synthétique, du talc, du kaolin, un flocon de verre, un flocon de dioxyde de silicium, un flocon de dioxyde de titane, un flocon d'oxyde d'aluminium ou un flocon d'oxyde de fer.

4. Utilisation selon une ou plusieurs des revendications 1 à 3, **caractérisée en ce que** le substrat sous forme de flocons est complètement revêtu d'une ou de plusieurs couche(s) d'oxydes de métal et/ou de mélanges d'oxydes de métal.

5. Utilisation selon une ou plusieurs des revendications 1 à 4, **caractérisée en ce que** le pigment perlescent est sélectionné parmi le groupe des pigments mentionnés ci-dessous :
flocons de mica naturel + TiO₂
flocons de mica naturel + Fe₂O₃
flocons de mica naturel + Fe₃O₄
flocons de mica naturel + TiO₂ + Fe₂O₃
flocons de mica naturel + TiO₂ + Fe₃O₄
flocons de mica naturel + Fe₂O₃ + TiO₂
flocons de mica naturel + Fe₃O₄ + TiO₂
flocons de mica naturel + mélange TiO₂/Fe₂O₃
flocons de mica naturel + mélange TiO₂/Fe₃O₄
flocons de mica synthétique + TiO₂
flocons de mica synthétique + Fe₂O₃
flocons de mica synthétique + Fe₃O₄
flocons de mica synthétique + TiO₂ + Fe₂O₃
flocons de mica synthétique + TiO₂ + Fe₃O₄
flocons de mica synthétique + Fe₂O₃ + TiO₂
flocons de mica synthétique + Fe₃O₄ + TiO₂
flocons de mica synthétique + mélange TiO₂/Fe₂O₃
flocons de mica synthétique + mélange TiO₂/Fe₃O₄
flocons de SiO₂ + TiO₂
flocons de SiO₂ + Fe₂O₃
flocons de SiO₂ + Fe₃O₄
flocons de SiO₂ + TiO₂ + Fe₂O₃
flocons de SiO₂ + TiO₂ + Fe₃O₄
flocons de SiO₂ + Fe₂O₃ + TiO₂
flocons de SiO₂ + Fe₃O₄ + TiO₂
flocons de SiO₂ + mélange TiO₂/Fe₂O₃
flocons de SiO₂ + mélange TiO₂/Fe₃O₄
flocons de mica naturel + TiO₂ + SiO₂ + TiO₂
flocons de mica naturel + Fe₂O₃ + SiO₂ + TiO₂
flocons de mica naturel + TiO₂ + SiO₂ + Fe₂O₃
flocons de mica naturel + TiO₂ + SiO₂ + Fe₃O₄
flocons de mica naturel + mélange TiO₂/Fe₂O₃ + SiO₂ + Fe₂O₃
flocons de mica naturel + mélange TiO₂/Fe₂O₃ + SiO₂ + mélange TiO₂/Fe₂O₃
flocons de mica naturel + mélange Fe₂O₃ + SiO₂ + mélange TiO₂/Fe₂O₃
flocons de mica synthétique + TiO₂ + SiO₂ + TiO₂
flocons de mica synthétique + Fe₂O₃ + SiO₂ + TiO₂
flocons de mica synthétique + TiO₂ + SiO₂ + Fe₂O₃
flocons de mica synthétique + TiO₂ + SiO₂ + Fe₃O₄
flocons de mica synthétique + mélange TiO₂/Fe₂O₃ + SiO₂ + Fe₂O₃
flocons de mica synthétique + mélange TiO₂/Fe₂O₃ + SiO₂ + mélange TiO₂/Fe₂O₃
flocons de mica synthétique + mélange Fe₂O₃ + SiO₂ + mélange TiO₂/Fe₂O₃
flocons de SiO₂ + TiO₂ + SiO₂ + TiO₂
flocons de SiO₂ + Fe₂O₃ + SiO₂ + TiO₂
flocons de SiO₂ + TiO₂ + SiO₂ + Fe₂O₃
flocons de SiO₂ + TiO₂ + SiO₂ + Fe₃O₄
flocons de SiO₂ + mélange TiO₂/Fe₂O₃ + SiO₂ + Fe₂O₃
flocons de SiO₂ + mélange TiO₂/Fe₂O₃ + SiO₂ + mélange TiO₂/Fe₂O₃
flocons de SiO₂ + mélange Fe₂O₃ + SiO₂ + mélange TiO₂/Fe₂O₃.

6. Utilisation selon une ou plusieurs des revendications 1 à 5, **caractérisée en ce que** de 0,5 % à 10 % en poids de pigment perlescent, sur la base du poids total de la pâte, sont utilisés pour la fabrication des oublies ou du papier comestible.

7. Utilisation selon une ou plusieurs des revendications 1 à 6, **caractérisée en ce que** le pigment perlescent est incorporé à l'intérieur de la pâte des oublies ou du papier comestible pendant ou après leur/sa préparation.

8. Utilisation selon une ou plusieurs des revendications 1 à 7, **caractérisée en ce que** (i) des pigments perlescents individuels, (ii) leurs mélanges ou (iii) des mélanges de pigments perlescents individuels en combinaison avec d'autres colorants et/ou pigments ou (iv) des mélanges de mélanges de pigments perlescents avec d'autres colorants et/ou pigments sont utilisés.

9. Utilisation selon une ou plusieurs des revendications 1 à 8, **caractérisée en ce que** des mélanges de pigments perlescents présentant des tailles de particule différentes sont utilisés.

10. Utilisation selon une ou plusieurs des revendications 1 à 9, **caractérisée en ce que** des arômes et/ou des édulcorants sont de façon additionnelle utilisés.

11. Procédé pour colorer des oublies et du papier comestible, **caractérisé en ce qu'**un ou plusieurs pigment(s) perlescent(s) qui est/sont basé(s) sur des substrats sous forme de flocons est/sont incorporé(s) à l'intérieur de la pâte pour les oublies et le papier comestible.

12. Procédé selon la revendication 10 ou 11, **caractérisé en ce que** la pâte qui comprend des pigments perlescents, laquelle est utilisée pour la fabrication des oublies et de papier comestible, ne contient pas d'amidon.

13. Oublies et papier comestible, **caractérisés en ce qu'**ils comprennent un ou plusieurs pigment(s) perlescent(s) qui est/sont basé(s) sur des substrats sous forme de flocons et en option, d'autres colorants.
